# FASCICULE DE BREVET EUROPEEN

(11) **EP 1 268 622 B1**
(45) Date de publication et mention de la délivrance du brevet: **05.04.2006**
(21) Numéro de dépôt: 01907664.5
(22) Date de dépôt: 22.01.2001
(51) Int. Cl.: C08J 7/12, B29C 59/12

(54) **PROCEDE DE TRAITEMENT DE SURFACE DE SUBSTRATS POLYMERES**
VERFAHREN ZUR OBERFLÄCHENBEHANDLUNG VON POLYMEREN SUBSTRATEN
METHOD FOR SURFACE TREATMENT OF POLYMERIC SUBSTRATES

(30) Priorité: 11.02.2000 EP 00400403
(43) Date de publication de la demande: 02.01.2003
(73) Titulaire: L'air Liquide, S.A. à Directoire et Conseil de Surveillance pour l'Etude et l'Exploitation des Procédés Georges Claude, 75321 Paris Cedex 07 (FR); Softal Electronic Erik Blumenfeld Gmbh & Co., 21107 Hamburg (DE)
(72) Inventeur: COCOLIOS, Panayotis, F-78830 Bullion (FR); COEURET, François, F-78280 Guyancourt (FR); FORSTER, Franck, c/o Softal Elect Erik Blumenfeld, 21107 Hamburg (DE); GELOT, Jean-Louis, F-78990 Elancourt (FR); MARTENS, Bernd, c/o Softal Electr Erik Blumenfeld, 21107 Hamburg (DE); PRINZ, Eckhardc/o Softal Electr Erik Blumenfeld, 21107 Hamburg (DE); RAMES-LANGLADE, Géraldine, F-92370 Chaville (FR); VILLERMET, Alain, F-78220 Viroflay (FR)
(74) Mandataire: Mellul-Bendelac, Sylvie Lisette
(86) Numéro de dépôt international: PCT/FR2001/000202
(87) Numéro de publication internationale: WO 2001/058992

(56) Documents cités:
- EP-A- 0 010 632
- US-A- 4 216 254
- US-A- 4 563 316
- US-A- 5 972 176
- PATENT ABSTRACTS OF JAPAN vol. 017, no. 373 (C-1083), 14 juillet 1993 (1993-07-14) & JP 05 059197 A (TOPPAN PRINTING CO LTD), 9 mars 1993 (1993-03-09)

## Description

La présente invention concerne le domaine des traitements de surface de substrats polymères, qui sont couramment utilisés dans de très nombreuses industries, notamment celle de l'emballage, de l'isolation thermique, ou encore pour la fabrication de composants électriques isolants.

Néanmoins, ces matériaux ont le plus souvent des propriétés de surface qui rendent leur utilisation difficile dans des processus de transformation tels l'impression ou le collage, processus dans lesquels le mouillage du substrat et son adhésion avec un enduit (encre, colle, vemis) sont indispensables : en effet leur faible mouillabilité, résultant de leur structure, rend par exemple très difficile l'application d'encres ou de colles sur de telles surfaces.

De nombreux types de traitement (préparation) de surface de substrats polymères ont alors été développés de façon industrielle pour améliorer leurs propriétés. Ces traitements de surface sont utilisés tant par les producteurs de films de polymères que par les transformateurs ultérieurs (impression de films d'emballage, fabrication de condensateurs électriques).

Parmi les méthodes les plus couramment utilisées pour effectuer ces opérations de traitement de surface, on trouve notamment des méthodes en phase liquide.

Outre que ces méthodes en phase liquide posent incontestablement des problèmes liés aux normes de respect de l'environnement qui sont de plus en plus sévères, il faut aussi signaler que l'application de ces méthodes en phase liquide se révèle très pointue et difficile à contrôler.

Dans ce contexte, une deuxième catégorie de méthodes de traitement de surfaces polymères a fait son apparition, elles sont qualifiées de "méthodes par voie sèche".

Dans cette catégorie, on peut citer l'exemple des traitements par flammage, utilisés de longue date dans cette industrie, mais dont l'effet thermique important les rendent difficilement compatibles avec les substrats de faible épaisseur (films, feuilles).

On peut également citer dans cette catégorie de traitements par voie sèche les traitements de surface par plasma sous basse pression, en vue d'introduire à la surface du polymère des fonctionnalités/groupements chimiques tels que des groupements amine, amide, nitrile, ou encore carbonyle, carboxyle et autre alcool ou ester, et changer ainsi les propriétés de surface du polymère, par exemple pour lui conférer une certaine hydrophilie. On peut illustrer cette catégorie de traitements basse pression à l'aide de l'ouvrage de N. Inagaki datant de 1996 (« Plasma surface modification and plasma polymerization, Laboratory of Polymer Chemistry at Shizuoka University, TECHNOMIC Publishing Co. lnc), ainsi que par le document EP-A-679 680 qui concerne des traitements plasma basse pression à l'aide de mélanges comportant 20 à 60 % de CO₂, ou 40 à 80% de N₂O. Ces méthodes sont en première approche très attractives car elles présentent l'avantage d'un très bon respect de l'environnement, mais leur forte potentialité ne peut occulter leurs inconvénients majeurs liés au fait qu'elles sont pratiquées sous pression réduite en mode discontinu, et sont donc incompatibles avec le traitement de grandes surfaces polymères ou encore avec des cadences de production élevées qui doivent être mises en oeuvre en mode continu.

Toujours dans cette catégorie de traitement de surface « par voie sèche » il faut signaler que le traitement le plus utilisé dans l'industrie est un traitement du polymère par décharge électrique dans l'air à pression atmosphérique (appelé dans l'industrie « traitement corona»). Malgré le caractère très répandu de ce traitement, on ne peut ignorer le fait que les valeurs d'énergie de surface obtenues par ce traitement sont trop faibles dans le cas de certains polymères tels le polypropylène, et que de plus elles décroissent rapidement dans le temps (mauvais vieillissement).

Il faut alors signaler que la Demanderesse a, dans les documents EP-A-516 804 et EP-A-622 474, proposé un procédé de traitement de surface de substrats polymères au cours duquel le substrat est soumis à une décharge électrique à barrière diélectrique, dans une atmosphère comportant un gaz porteur, un silane, et un gaz oxydant, à une pression sensiblement égale à la pression atmosphérique, en vue de déposer à la surface du substrat une couche à base de silicium. Comme le rapporte ces documents, les procédés en question donnent lieu incontestablement à d'excellentes propriétés de surface, mais l'on conçoit que l'utilisation d'un silane entraîne un surcoût qui n'est pas toujours acceptable selon l'industrie concernée (applications à faible valeur ajoutée).

On peut également citer, dans ce domaine des méthodes de traitement de surface par décharge électrique à pression atmosphérique, les travaux de la société Toray Industries tels que notamment rapportés dans le document EP-A-10 632, où l'auteur rapporte les résultats de traitements de surface de substrats polymères selon lesquels une décharge corona est effectuée à pression atmosphérique dans un mélange azote-CO₂, la teneur en CO₂ du mélange allant (de 5000 ppm à 50%. Tous les exemples donnés dans le document montrent clairement que les meilleurs résultats de traitement, par exemple en terme d'énergie de surface (énergie de 60 dynes/cm et plus), sont obtenus pour des teneurs en CO₂ de plusieurs % voire plusieurs dizaines de % dans le mélange.

Dans ce contexte de méthodes existantes, les travaux qu'a poursuivis la Demanderesse sur ce sujet ont montré la nécessité de proposer de nouvelles conditions de traitement de surface de substrats polymères par décharge électrique, ceci pour les raisons suivantes :
- les besoins en terme de propriétés de surface (énergie de surface, mouillabilité...) sont très différents d'un secteur de l'industrie à l'autre : par exemple entre un producteur de films polymères qui demandera un très bon maintien de l'énergie de surface des films avec le temps (compte tenu des temps de stockage des produits avant leur transformation) et un transformateur qui nécessitera très souvent de bonnes propriétés immédiates (par exemple lors de l'application de son traitement d'impression).
- les procédés selon l'art antérieur proposent le plus souvent des propriétés très élevées, plus élevées que nécessaire pour certaines applications industrielles qui pourraient par exemple se satisfaire de valeurs d'énergie de surface bien plus faibles.

La présente invention a alors pour objectif d'apporter une réponse aux problèmes techniques ci-dessus mentionnés, en proposant notamment de nouvelles conditions de traitement de surfaces polymères par décharge électrique permettant de contrôler la nature chimique des fonctions greffées sur la surface traitée ainsi que leur densité surfacique, et de fournir ainsi les propriétés requises par chaque site utilisateur, dans des conditions économiques.

L'application du procédé de traitement de surface selon l'invention aura alors notamment pour objectif de faciliter l'application d'une opération ultérieure, par exemple faciliter l'accrochage d'un revêtement d'encre, de vernis ou encore de colle.

Le procédé de traitement de surface de substrats polymères selon l'invention, au cours duquel le substrat est soumis à une décharge électrique à barrière diélectrique, dans un mélange gazeux de traitement comportant un gaz porteur, ainsi qu'un gaz réducteur et un gaz oxydant, à une pression sensiblement égale à la pression atmosphérique, se caractérise alors par la mise en oeuvre des mesures suivantes :
- la teneur en gaz oxydant dans le mélange est comprise dans une gamme allant de 50 à 2000 ppm vol,
- la teneur en gaz réducteur dans le mélange est comprise dans une gamme allant de 50 à 30000 ppm vol.

Le procédé selon l'invention peut par ailleurs adopter l'une ou plusieurs des caractéristiques techniques suivantes :
- le gaz oxydant est le CO₂ ou le N₂O ou H₂O ou un mélange de ces gaz.
- R étant le rapport entre ladite teneur en gaz réducteur et ladite teneur en gaz oxydant dans le mélange, on a 0< R <15.
- la teneur en gaz oxydant dans le mélange de traitement est comprise dans une gamme allant de 100 à 1000 ppm vol., le rapport R entre ladite teneur en gaz réducteur et ladite teneur en gaz oxydant dans le mélange étant compris dans la gamme 0,5 ≤ R ≤ 8.
- les dites teneurs et ledit rapport R entre ladite teneur en gaz réducteur et ladite teneur en gaz oxydant dans le mélange de traitement sont ajustés de manière à obtenir une énergie de surface des substrats ainsi traités qui soit de niveau intermédiaire telle que située dans la gamme allant de 40 à 50 mN/métre.
- les dites teneurs et ledit rapport R entre ladite teneur en gaz réducteur et ladite teneur en gaz oxydant dans le mélange de traitement sont ajustés de manière à obtenir une énergie de surface des substrats ainsi traités qui soit supérieure à 50 mN/mètre.
- ledit gaz réducteur est de l'hydrogène.
- au préalable, le substrat a été soumis à un prétraitement par passage dans une décharge électrique à barrière diélectrique, à une pression sensiblement égale à la pression atmosphérique, dans un mélange gazeux de prétraitement constitué d'air ou d'un gaz inerte, ce gaz inerte étant préférentiellement l'azote, l'argon, l'hélium ou un mélange de ces gaz.
- ledit substrat à la forme d'une feuille.
- ledit substrat à la forme d'un film.
- ledit substrat est une mousse.
- ledit substrat est constitué de fibres polymères tissées ou non tissées.
- le polymère est une polyoléfine, un polymère vinylique, un polystyrène, un polyester, un polyamide ou un polycarbonate .
- le gaz porteur est un gaz inerte.
- le gaz porteur est l'azote, ou l'argon, ou l'hélium ou un mélange de ces gaz.

Comme on l'aura compris à la lecture de ce qui précède, la notion de « gaz oxydant » selon la présente invention recouvre de façon très générale l'oxygène ainsi que les gaz susceptibles de libérer de l'oxygène. On préfère néanmoins selon la présente invention utiliser le CO₂ ou le N₂O ou H₂O ou un mélange de ces gaz.

De même, si l'on a tout particulièrement illustré dans ce qui précède le cas de l'hydrogène comme gaz réducteur, on conçoit que bien d'autres gaz entrent dans cette catégorie sans sortir à aucune moment du cadre de la présente invention.

On va montrer dans ce qui suit à l'aide de nombreux exemples de mise en oeuvre que la présente invention permet effectivement de fournir les propriétés de surface requises par chaque type de site utilisateur, qu'il s'agisse de propriétés immédiates ou de maintien dans le temps, ceci dans des conditions remarquablement économiques.

On va également montrer dans l'analyse qui suit que ces conditions et résultats sont en contradiction avec ce qu'annonçait jusqu'ici la littérature existante.

On décrit ici un premier exemple de traitement de surface (non conforme à l'invention), sur un film commercialement disponible de polypropylène sans additif, d'épaisseur 15 microns, ce film étant traité sous différents mélanges N2/CO2, ceci pour une vitesse de défilement du film de 50 m/min et une puissance spécifique de décharge de 60 Wmn/m². Dans chaque cas on mesure l'énergie de surface ainsi que le résultat d'un test d'adhésion, test d'adhésion dit « tape test à 90° » couramment pratiqué dans l'industrie et au cours duquel il est attribué une note de 1 à 5 (utilisation à cette occasion du tape 4104 de la marque Tesa™).

On obtient alors pour ce premier exemple les résultats suivants (Tableau 1).

**Tableau 1**

| Teneur en CO2 dans le mélange | Énergie de surface juste après traitement | Test d'adhésion à 90° |
|---|---|---|
| 500 ppm | 58 | Note 4/5 |
| 5000 ppm | 58 | Note 3/5 |
| 10 % | 52 | Note 3/5 |

On note donc immédiatement à l'examen des résultats du tableau que contrairement à ce qu'annonce la littérature citée plus haut dans la présente demande, d'excellents résultats, tant en terme d'énergie de surface que d'adhésion, sont obtenus pour de faibles teneurs en CO₂. Alors qu'une dégradation se produit pour des teneurs atteignant 10 % (a fortiori plusieurs dizaine de %).

On va illustrer ci-dessous (tableau 2) dans le cadre d'un second exemple de traitement de surface (partiellement conforme à l'invention), l'influence de l'hydrogène sur les résultats obtenus. Le film traité ici est le même que celui de l'exemple 1, de même pour la vitesse de défilement, alors que la puissance spécifique de décharge est ici de 35 Wmn/m².

**Tableau 2**

| | Mélange gazeux | teneurs (ppm) | Énergie de surface juste après traitement (mN/m) |
|---|---|---|---|
| * | N2/CO2 | 250 ppm de CO2 | 52 |
| * | N2/CO2 | 500 ppm de CO2 | 55 |
| | N2/CO2/H2 | 250 ppm de CO2 et 250 ppm de H2 | 58 |
| * | N2/H2 | 250 ppm de H2 | 55 |
| * | N2/H2 | 500 ppm de H2 | 56 |
| * | Air | // | 34 |

| | | | |
|---|---|---|---|
| * essai comparatif | | | |

On constate alors sur ce tableau l'intérêt du mélange ternaire pour ce polymère, y compris pour de faibles teneurs en CO₂ et en hydrogène.

Le tableau 3 ci-dessous illustre pour sa part dans le cadre d'un troisième exemple de mise en oeuvre de l'invention, l'influence du rapport H₂/N₂O (dans une atmosphère N₂/N₂O/H₂ à 250 ppm de N₂O) sur les résultats observés.

Pour ce troisième exemple le film traité est le même que celui de l'exemple 1, la vitesse de défilement est ici de 80m/min, tandis que la puissance spécifique de la décharge est ici de 25Wmn/m2.

On constate alors sur ce tableau 3 que la valeur du rapport H₂/N₂O exerce une influence sur les résultats obtenus immédiatement après traitement, et que plus la valeur du rapport H₂ est élevée plus les résultats s'améliorent (ceci étant valable jusqu'à un certain niveau du rapport H₂/N₂O).

On notera par ailleurs que les résultats après 100 jours de vieillissement (non présentés sur le tableau) montrent un résultat relativement constant à 40 mN/m quelque soit le rapport H₂/N₂O (à titre illustratif on note que l'on obtient, dans ces mêmes conditions de vieillissement à 100 jours, une valeur de 34 mN/m pour le cas d'un traitement corona air de ce même film).

**Tableau 3**

| | rapport H2/N2O | Énergie de surface juste après traitement (mN/m) |
|---|---|---|
| * | 0 (=N2/N2O) | 44 |
| | 0,5 | 42 |
| | 1 | 42 |
| | 2 | 44 |
| | 4 | 46 |
| | 8 | 46 |

| | | |
|---|---|---|
| * essai comparatif | | |

Le tableau 4 ci-dessous illustre dans le cadre d'un 4e exemple de mise en oeuvre de l'invention, l'influence du rapport H₂/CO₂ (dans une atmosphère N₂/CO₂/H₂ à 500 ppm de CO₂) sur les résultats observés.

Pour ce 4^{e} exemple, le film traité est le même que celui de l'exemple 1, la vitesse de défilement est ici de 50 m/min, tandis que la puissance spécifique de la décharge est ici de 50 Wmn/m².

On voit bien alors que dans ce cas-ci, le rapport H₂/CO₂ n'a que peu d'influence sur les résultats à t=0, alors qu'en revanche son influence est grande à 100 jours.

Le tableau 5 ci-dessous illustre l'effet de la puissance spécifique sur les résultats obtenus, pour le même film que précédemment, le mélange gazeux de traitement étant un mélange N₂/N₂O à 250 ppm de N₂O.

Les résultats du tableau 5 permettent de constater le fait que plus la puissance est élevée, plus les performances s'améliorent, y compris en vieillissement (mais on note aussi que plus la puissance est élevée plus la dégradation relative dans le temps est élevée).

**Tableau 4**

| | Rapport H2/CO2 | Énergie de surface immédiatement après traitement (mN/m) | Énergie de surface à t = 100 jours (mN/m) |
|---|---|---|---|
| * | N2/C02 500ppm | 58 | 46 |
| | 0,5 | 60 | 44 |
| | 1 | 60 | 46 |
| | 2 | 60 | 48 |
| | 4 | 60 | 42 |
| | 8 | 60 | 52 |

| | | | |
|---|---|---|---|
| * essai comparatif | | | |

**Tableau 5**

| Puissance spécifique Wmn/m2 | Vitesse de défilement | Energie immédiatement après traitement (mN/m) | Energie à t = 100 jours (mN/m) |
|---|---|---|---|
| 25 | 80 m/min | 44 | 42 |
| 35 | 50 m/min | 48 | 40-44 |
| 50 | 50 m/min | 58 | 48 |

Le tableau 6 illustre alors l'effet comparatif d'un pré-traitement corona à l'air selon l'invention d'une part sur le polymère déjà évoqué dans le cadre des exemples 1 à 5 (polypropylène sans additifs) et d'autre part sur du polypropylène additivé (source commercialement disponible). Le traitement principal selon l'invention est effectué à l'aide d'une vitesse de défilement de 50 m/min, d'une puissance spécifique de 50 Wmn/m², le mélange de traitement utilisé étant un mélange N₂/CO₂/H₂ à 500 ppm de CO₂ et 500 ppm d'hydrogène.

On voit bien alors que le comportement de ces deux types de substrats vis à vis du pré-traitement n'est pas identique : dans le cas du polypropylène non additivé le pré-traitement a dégradé la surface entraînant une chute de performances, alors que dans le cas du polypropylène additivé l'effet du pré-traitement est incontestablement positif.

**Table 6**

| Film | Pré-traitement à 50 Wmn/m2 | Énergie immédiatement après traitement (mN/m) |
|---|---|---|
| PP additivé | Non | 44 |
| PP additivé | Oui | 54 |
| PP non additivé | Oui | 41 |

On conçoit alors que l'on a bien effectivement démontré à l'aide des nombreux exemples précédents que la présente invention offre des nouvelles conditions de traitement de surface de substrats polymères par voie sèche permettant effectivement de fournir les propriétés de surface requises par chaque type de site utilisateur, que ce site requiert des propriétés de surface immédiates ou qu'il requiert des propriétés se maintenant dans le temps, ceci dans des conditions remarquablement économiques (mise en oeuvre de gaz bon marché avec au demeurant des teneurs en gaz actifs extrêmement faibles par rapport à ce qui est recommandé dans la littérature existante).

De même comme-on l'aura compris à la lecture de ce qui précède, quoique la présente invention ait été décrite en relation avec des modes de réalisation particuliers, elle ne s'en trouve pas limitée pour autant mais est au contraire susceptible de modifications et de variantes qui apparaîtront à l'homme de l'art dans le cadre des revendications ci-après. Ainsi, si l'on a tout particulièrement insisté dans ce qui précède sur les grandes familles de polymères d'utilisation très courante que sont les polystyrènes ou encore les polyoléfines, on aura compris que la présente invention apporte une réponse technique à tous les types d'applications, y compris sur des polymères moins couramment utilisés tels que les polyamides ou encore les polyacrylonitriles, ceci étant donné à titre illustratif des nombreuses familles de polymères présentes dans l'industrie, nullement limitatif.

## Revendications

1. Procédé de traitement de surface de substrats polymères au cours duquel le substrat est soumis à une décharge électrique à barrière diélectrique, dans un mélange gazeux de traitement comportant un gaz porteur, ainsi qu'un gaz réducteur et un gaz oxydant, à une pression sensiblement égale à la pression atmosphérique, la teneur en gaz oxydant dans le mélange étant comprise dans une gamme allant de 50 à 2000 ppm vol, et la teneur en gaz réducteur dans le mélange étant comprise dans une gamme allant de 50 à 30000 ppm vol.

2. Procédé de traitement de surface selon la revendication 1. **caractérisé en ce que** ledit gaz oxydant est le CO₂ ou le N₂O ou H₂O ou un mélange de ces gaz.

3. Procédé de traitement de surface selon la revendication 1 ou 2, **caractérisé en ce que** R étant le rapport entre ladite teneur en gaz réducteur et ladite teneur en gaz oxydant dans le mélange, on a 0 < R < 15.

4. Procédé de traitement de surface selon la revendication 3, **caractérisé en ce que** la teneur en gaz oxydant dans le mélange de traitement est comprise dans une gamme allant de 100 à 1000 ppmol., le rapport R étant compris dans la gamme 0.5 ≤ R ≤ 8.

5. Procédé de traitement de surface selon la revendication 3 ou 4, **caractérisé en ce que** les dites teneurs et ledit rapport R sont ajustés de manière à obtenir une énergie de surface des substrats ainsi traités qui soit de niveau intermédiaire telle que située dans la gamme allant de 40 à 50 mN/m.

6. Procédé de traitement de surface selon la revendication 3 ou 4, **caractérisé en ce que** les dites teneurs et ledit rapport R sont ajustés de manière à obtenir une énergie de surface des substrats ainsi traités qui soit supérieure à 50 mN/m.

7. Procédé de traitement de surface selon l'une des revendications précédentes, **caractérisé en ce que** au préalable, le substrat a été soumis à un prétraitement par passage dans une décharge électrique à barrière diélectrique, à une pression sensiblement égale à la pression atmosphérique, dans un mélange gazeux de pré-traitement constitué d'air ou d'un gaz inerte ou d'un mélange de ces gaz.

8. Procédé de traitement de surface selon l'une des revendications précédentes, **caractérisé en ce que** ledit substrat à la forme d'une feuille.

9. Procédé de traitement de surface selon l'une des revendications 1 à 7, **caractérisé en ce que** ledit substrat à la forme d'un film.

10. Procédé de traitement de surface selon l'une des revendications 1 à 7, **caractérisé en ce que** ledit substrat est constitué de fibres polymères tissées ou non tissées.

11. Procédé de traitement de surface selon l'une des revendications 1 à 7, **caractérisé en ce que** ledit substrat est une mousse.

12. Procédé de traitement de surface selon l'une des revendications précédentes, **caractérisé en ce que** le polymère est une polyoléfine, un polymère vinylique, un polystyrène, un polyester, un polyamide ou un polycarbonate.

## Claims

1. Method for surface treatment of polymer substrates, in which the substrate is subjected to a dielectric barrier electrical discharge, in a treatment gas mixture containing a carrier gas and also a reducing gas and an oxidizing gas, at a pressure approximately equal to atmospheric pressure, the content of oxidizing gas in the mixture lying within a range from 50 to 2000 ppmv, and the content of reducing gas in the mixture lying within a range from 50 to 30 000 ppmv.

2. Surface treatment method according to Claim 1, **characterized in that** said oxidizing gas is CO₂ or N₂O or H₂O or a mixture of these gases.

3. Surface treatment method according to Claim 1 or 2, **characterized in that**, with R being the ratio of said content of reducing gas to said content of oxidizing gas in the mixture, 0 < R < 15.

4. Surface treatment method according to Claim 3, **characterized in that** the content of oxidizing gas in the treatment mixture lies within a range from 100 to 1000 ppmv, the ratio R lying in the range 0.5 ≤ R ≤ 8.

5. Surface treatment method according to Claim 3 or 4, **characterized in that** said contents and said ratio R are adjusted so as to obtain a surface energy of the substrates thus treated which is at an intermediate level such that it lies within the range from 40 to 50 mN/m.

6. Surface treatment method according to Claim 3 or 4, **characterized in that** said contents and said ratio R are adjusted so as to obtain a surface energy of the substrates thus treated which is greater than 50 mN/m.

7. Surface treatment method according to one of the preceding claims, **characterized in that** the substrate was subjected beforehand to a pretreatment by passing it through an electrical discharge with dielectric barrier, at a pressure approximately equal to atmospheric pressure, in a pretreatment gas mixture consisting of air or an inert gas, or a mixture of these gases.

8. Surface treatment method according to one of the preceding claims, **characterized in that** said substrate is in the form of a sheet.

9. Surface treatment method according to one of Claims 1 to 7, **characterized in that** said substrate is in the form of a film.

10. Surface treatment method according to one of Claims 1 to 7, **characterized in that** said substrate consists of woven or nonwoven polymer fibers.

11. Surface treatment method according to one of Claims 1 to 7, **characterized in that** said substrate is a foam.

12. Surface treatment method according to one of the preceding claims, **characterized in that** the polymer is a polyolefin, a vinyl polymer, a polystyrene, a polyester, a polyamide or a polycarbonate.

## Patentansprüche

1. Verfahren zur Oberflächenbehandlung von polymeren Substraten, während dessen das Substrat einer dielektrischen Barrierenentladung unterworfen wird, in einem Behandlungsgasgemisch, das ein Trägergas sowie ein reduzierendes Gas und/oder ein oxidierendes Gas umfasst, bei einem Druck, der ungefähr gleich dem atmosphärischen Druck ist, wobei der Gehalt des oxidierenden Gases im Gemisch in einem Bereich von 50 bis 2000 ppmv liegt und der Gehalt des reduzierenden Gases im Gemisch in einem Bereich von 50 bis 30000 ppmv liegt.

2. Verfahren zur Oberflächenbehandlung nach Anspruch 1, **dadurch gekennzeichnet, dass** das oxidierende Gas CO₂ oder N₂O oder H₂O oder ein Gemisch dieser Gase ist.

3. Verfahren zur Oberflächenbehandlung nach Anspruch 1 oder 2, **dadurch gekennzeichnet, dass** 0 < R < 15, wobei R das Verhältnis zwischen dem Gehalt des reduzierenden Gases und dem Gehalt des oxidierenden Gases im Gemisch ist.

4. Verfahren zur Oberflächenbehandlung nach Anspruch 3, **dadurch gekennzeichnet, dass** der Gehalt des oxidierenden Gases im Behandlungsgemisch in einem Bereich von 100 bis 1000 ppmv liegt, wobei das Verhältnis R im Bereich 0,5 ≤ R ≤ 8 liegt.

5. Verfahren zur Oberflächenbehandlung nach Anspruch 3 oder 4, **dadurch gekennzeichnet, dass** die Gehalte und das Verhältnis R derart angepasst sind, dass eine Oberflächenenergie der so behandelten Substrate erreicht wird, die auf einem Zwischenniveau liegt, im Bereich von 40 bis 50 mN/m.

6. Verfahren zur Oberflächenbehandlung nach Anspruch 3 oder 4, **dadurch gekennzeichnet, dass** die Gehalte und das Verhältnis R derart angepasst sind, dass eine Oberflächenenergie der so behandelten Substrate erreicht wird, die größer 50 mN/m ist.

7. Verfahren zur Oberflächenbehandlung nach einem der vorstehenden Ansprüche, **dadurch gekennzeichnet, dass** das Substrat vorher einer Vorbehandlung durch eine dielektrische Barrierenentladung unterworfen wurde, bei einem Druck, der ungefähr gleich dem atmosphärischen Druck ist, in einem Vorbehandlungsgasgemisch, das aus Luft oder einem Inertgas oder einem Gemisch dieser Gase besteht.

8. Verfahren zur Oberflächenbehandlung nach einem der vorstehenden Ansprüche, **dadurch gekennzeichnet, dass** das Substrat die Form einer Folie aufweist.

9. Verfahren zur Oberflächenbehandlung nach einem der Ansprüche 1 bis 7, **dadurch gekennzeichnet, dass** das Substrat die Form einer dünnen Schicht aufweist.

10. Verfahren zur Oberflächenbehandlung nach einem der Ansprüche 1 bis 7, **dadurch gekennzeichnet, dass** das Substrat aus Polymerfasern besteht, die gewebt oder nicht gewebt sind.

11. Verfahren zur Oberflächenbehandlung nach einem der Ansprüche 1 bis 7, **dadurch gekennzeichnet, dass** das Substrat ein Schaumstoff ist.

12. Verfahren zur Oberflächenbehandlung nach einem der vorstehenden Ansprüche, **dadurch gekennzeichnet, dass** das Polymer ein Polyolefin, ein Vinylpolymer, ein Polystyrol, ein Polyester, ein Polyamid oder ein Polycarbonat ist.
